(19) Europäisches Patentamt

European Patent Office

Office européen des brevets

(11) **EP 1 667 481 A1**

(12) **EUROPEAN PATENT APPLICATION**
published in accordance with Art. 158(3) EPC

(43) Date of publication:
**07.06.2006 Bulletin 2006/23**

(51) Int Cl.:
*H04Q 7/36* (1995.01)    *H04L 12/28* (1990.01)

(21) Application number: **04772676.5**

(22) Date of filing: **02.09.2004**

(86) International application number:
**PCT/JP2004/012722**

(87) International publication number:
**WO 2005/029895 (31.03.2005 Gazette 2005/13)**

(84) Designated Contracting States:
**AT BE BG CH CY CZ DE DK EE ES FI FR GB GR HU IE IT LI LU MC NL PL PT RO SE SI SK TR**

(30) Priority: **22.09.2003 JP 2003329766**

(71) Applicants:
• **Keio University**
  **Tokyo 108-8345 (JP)**
• **Multimedia Research Institute Corp.,**
  **Tokyo 102-0093 (JP)**

(72) Inventors:
• **NAKAGAWA, Masao**
  **Yokohama-shi, Kanagawa 2238522 (JP)**
• **ESMAILZADEH, Riaz**
  **Yokohama-shi, Kanagawa 223852 (JP)**

(74) Representative: **Klingseisen, Franz et al**
**Zumstein & Klingseisen**
**Patentanwälte**
**Postfach 10 15 61**
**80089 München (DE)**

(54) **RADIO COMMUNICATION APPARATUS, RADIO COMMUNICATION SYSTEM, AND BASE STATION EQUIPMENT**

(57)    Radio communications apparatus, radio communications system, and base station equipment that effectively utilize the network resources of both an ad-hoc network and a mobile communications network to increase the efficiency of and optimize the networks, thereby improving the communication capacity and throughput of the networks as a whole. The radio communications apparatus (UE1) employs TDD-CDMA system for communications with a base station (30) of the mobile communications network, and also employs the TDD-CDMA system, which is common to the base station, for communications with other radio communications apparatuses in the ad-hoc network, while using the same frequency band. Communications paths for communicating with the base station equipment include a first communications path for directly communicating with the base station and a second communications path for communicating with the base station equipment via another radio communications apparatus (UE2, UE3 or the like) in the ad-hoc network. The radio communications apparatus (UE1) uses one of those communications paths, which is designated by the base station equipment, to communicate with the base station equipment.

FIG.3

## Description

Technical Filed

The present invention relates to a radio communications system, base station equipment and a radio communications apparatus having ad-hoc communications means for constructing an ad-hoc network with other radio communications apparatuses existing therearound to wirelessly communicate with the other radio communications apparatuses.

Background Art

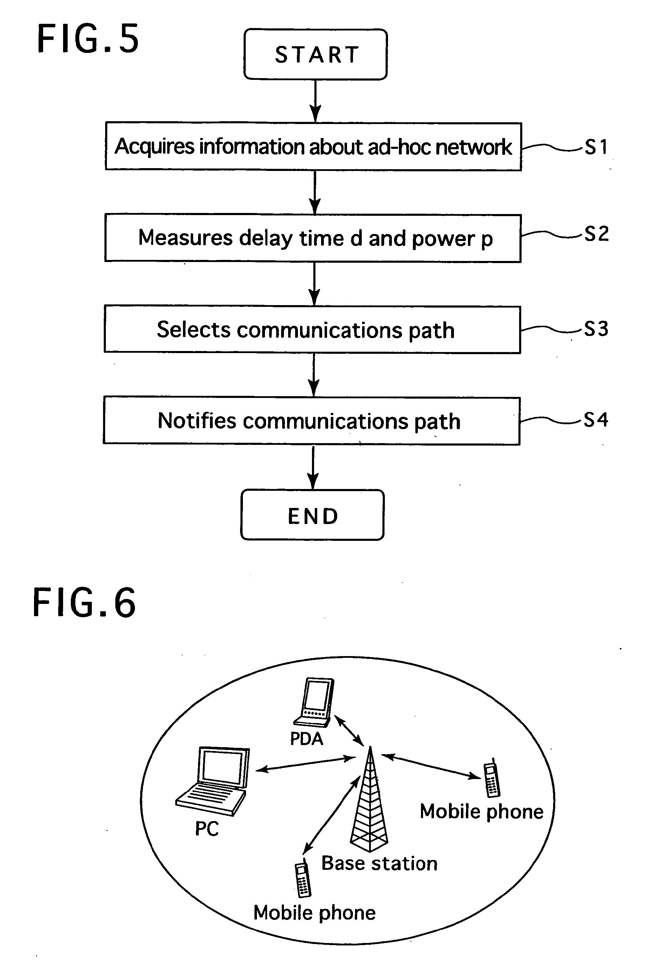

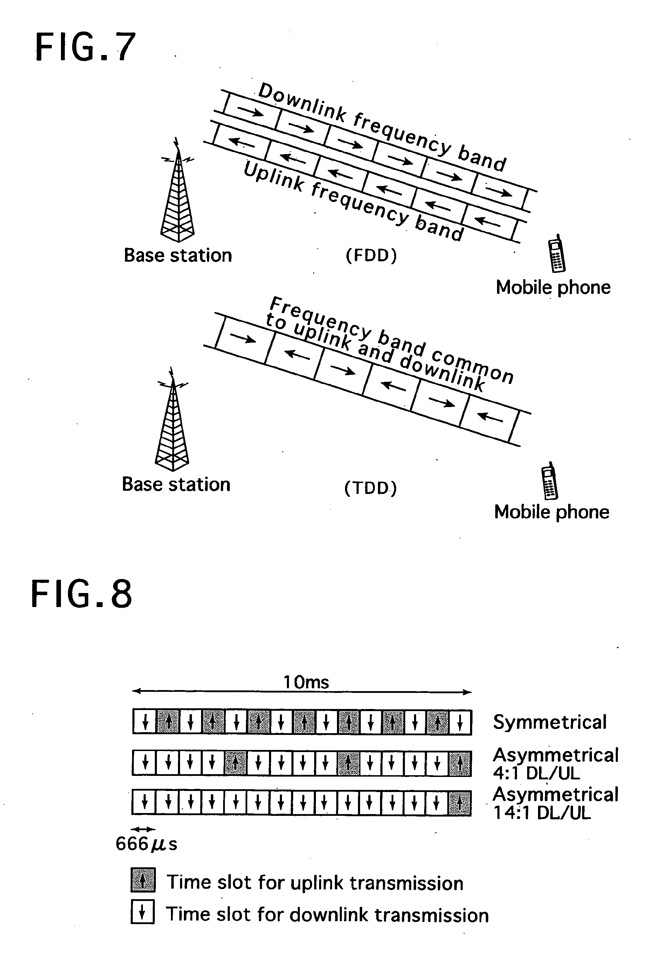

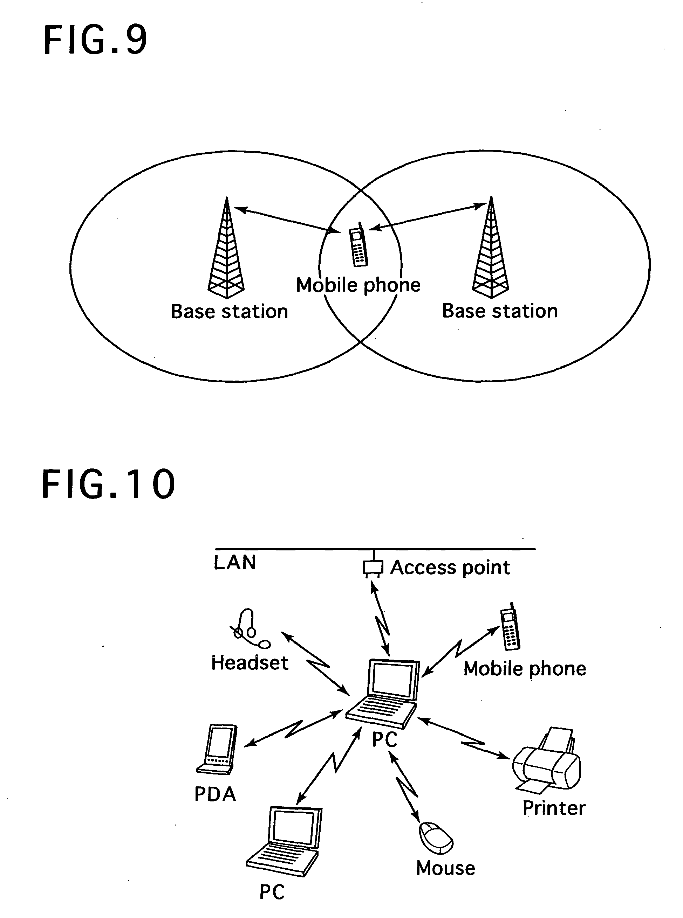

As well known, in amobile communications network, amobile station is configured by a radio communications apparatus (user equipment) such as a mobile phone, a personal computer or a PDA, and communications between such a mobile station and a base station are wirelessly performed. In the case of making a voice call or performing data communications between mobile stations, signals are exchanged via the base station as shown in Figure 6. As a communications system to be used for such mobile communications, for example, GSM (Global System for Mobile Communications), WCDMA (Wideband Code Division Multiple Access) and the like are known.
In the mobile communications network described above, communications between a mobile station and a base station are bidirectional, and the communications mode is a duplex mode in which transmitting and receiving are performed at the same time. As shown in Figure 7 , the following types of duplex mode exist: an FDD (Frequency Division Duplex) mode in which different frequency bands are used for the uplink from the mobile station to the base station and the downlink from the base station to the mobile station, and a TDD (Time Division Duplex) mode in which, though the same frequency band is used for the uplink and the downlink, the uplink and the downlink are switched in a very short time. In the TDD mode, one frame is divided into multiple (for example, fifteen) time slots, and any of the uplink and the downlink is assigned to each of the time slots. Figure 8 shows frame configuration of TDD-CDMA (Code Division Multiple Access) in which the TDD mode is adopted as a duplex mode. In this TDD-CDMA system, it is possible to set the ratio and arrangement of time slots to be assigned to the uplink and the downlink as appropriate, based on the traffic and the like.
In the mobile communications network described above, a mobile station is generally capable of establishing communication with multiple base stations at the same time. For example, as shown in Figure 9, when a mobile station moves out of a communications area (a cell) of a base station, processing called handover is performed by the mobile station in response to change in receive power, which is processing for switching a target base station. Amobile station measures strength of signals transmitted from other base stations therearound while communication is established with a base station, and compares the measured values and the strength of a signal transmitted from the base station currently in communication. When the difference is equal to or below a set value, handover processing is started. When a signal received from another base station is stronger than that from the base station currently in communication, the processing for handover to that other base station is made.
An ad-hoc network is known, as a short-distance radio data communications network. In the ad-hoc network, it is possible for radio communications apparatuses existing within a range where radio waves reach to directly communicate with one another without going through a base station, as shown in Figure 10. Therefore, using an ad-hoc network is advantageous in that a base station or an access point is not required, and a network can be simply constructed even where such communications infrastructure is not existing. As communications technologies for constructing such an ad-hoc network, there exist Bluetooth and Wireless LAN (IEEE802.11x), for example.
However, conventionally, different communications systems are adopted for the ad-hoc network and the mobile communications network described above, and therefore, when it is attempted to realize a radio communications apparatus capable of connecting to both of the networks, there is a problem with the complexity, and increased cost of the radio communications apparatus.
Furthermore, when handover is made from one network (for example, the ad-hoc network) to the other network (for example, the mobile communications network), there is a problem that significant time is required for handover because their communications systems are different from each other.

Disclosure of the Invention

The present inventors and their colleagues have developed a radio communications apparatus which adopts a common TDD-CDMA system for communications in an ad-hoc network and communications in a mobile communications network and uses the same frequency band, as a radio communications apparatus to solve the problem described above, and has disclosed a technique for this in Japanese Patent Application No. 2003-160576. According to this radio communications apparatus, since the same communications system is used for an ad-hoc network and a mobile communications network, an advantage is obtained that complexity of apparatus configuration and increase in cost can be avoided and, furthermore, network handover can be performed smoothly.

However, in the radio communications apparatus described above, in order to further improve communication characteristics and enhance the communication capacity and the throughput of the entire network, it is necessary to effectively utilize network resources of both of the ad-hoc network and the mobile communications network to increase network efficiency.

The present invention has been made in consideration of this situation, and its objective is to provide a radio communications apparatus, a radio communications system and base station equipment capable of effectively utilizing network resources of both of an ad-hoc network and a mobile communications network to increase network efficiency and thereby improving the communication capacity and the throughput of the entire network.

In order to achieve the above objective, a radio communications apparatus according to the present invention is, as described in Claim 1, a radio communications apparatus which constructs an ad-hoc network with other radio communications apparatuses existing therearound to wirelessly communicate with the other radio communications apparatuses using a TDD-CDMA system, and wirelessly communicates with base station equipment of a mobile communications network using the TDD-CDMA system; the radio communications apparatus having a first communications path for directly communicating with the base station equipment and a second communications path for communicating with the base station equipment via another radio communications apparatus within the ad-hoc network, as communications paths to the base station equipment, and communicating with the base station equipment using a communications path specified by the base station equipment among the first communications path and the second communications paths.

Here, TDD-CDMA is a CDMA (Code Division Multiple Access) system which uses TDD (Time Division Duplex) as its duplex mode. CDMA is a communications system which uses spread spectrum. CDMA includes a single-carrier mode in which transmission is performed by means of a single carrier wave and a multi-carrier mode in which multiple carrier waves are used in order to reduce influence of fading. TD-CDMA standardized by the 3GPP (3rd Generation Partnership Project), for example, is given as an example of TDD-CDMA.

As the radio communications apparatus, a mobile phone and an information terminal such as a PDA (personal digital assistance) and a personal computer, which can connect to a mobile communications network, are given as examples. These radio communications apparatuses have a function of constructing an ad-hoc network with radio communications apparatuses therearound at least within a range in which radio waves reach to enable the radio communications apparatuses within the ad-hoc network to communicate with one another (hereinafter referred to as an ad-hoc communications function).

Though the base station equipment can be configured, for example, only by a base station of a mobile communications network, it is also possible to configure it by combination of the base station and radio network controller equipment which controls the base station.

As the "other radio communications apparatuses within the ad-hoc network" which relay communications between the base station equipment and the radio communications apparatus, for example, there are included a radio communications apparatus having a function of performing radio communications with the base station of the mobile communications network (a first ad-hoc terminal) and a radio communications apparatus capable of connecting to the radio network controller equipment via a communications network such as a LAN (a second ad-hoc terminal). When there are multiple such "other radio communications apparatuses within the ad-hoc network" having the relay function, multiple second communications paths can be formed accordingly.

According to the present invention, as described in Claim 2, there is provided a radio communications system comprising: base station equipment of a mobile communications network; and a radio communications apparatus which uses a TDD-CDMA system for communications with the base station equipment and uses the same TDD-CDMA system and the same frequency band as of the mobile communications network for communications with other radio communications apparatuses within an ad-hoc network. A communications path for directly connecting the radio communications apparatus and the base station equipment is assumed to be a first communications path and communications paths for connecting the radio communications apparatus and the base station equipment via the other radio communications apparatuses within the ad-hoc network are assumed to be second communications paths. The base station equipment comprises: measurement means for measuring, for each of the first communications path and the second communications paths, power required for transmitting a signal and delay time required for the transmitted signal to reach a communication counterpart; and communications path selection means for selecting at least any one of the first communications path and the second communications paths as a communications path to be used for communications with the radio communications apparatus, based on the measured values of the power and the delay time and notifying the radio communications apparatus of the selected communications path. The radio communications apparatus communicates with the base station equipment using the communications path notified by the base station equipment.

In the radio communications system mentioned above, as described in Claim 3, the communications path selection means may be configured to determine, for each of the first communications path and the second communications paths, a function value of an evaluation function with the measured values of the power and the delay time as arguments, and select at least any one among the first communications path and the second communications paths as a communications path to be used for communications with the radio communications apparatus, based on the result of comparison of the function values.

Furthermore, in the radio communications system mentioned above, as described in Claim 4, the communications path selection means excludes, when tolerance values are set for the power and the delay time in advance, such a communications path that at least one of the power and the delay time thereof exceeds the tolerance value.

As described in Claim 5 , according to the present invention, there is provided base station equipment of a mobile communications network which communicates with a mobile station, in the case where the mobile station is a radio communications apparatus capable of constructing an ad-hoc network with other radio communications apparatuses existing therearound to wirelessly communicate with the other radio communications apparatuses using a TDD-CDMA system, using the TDD-CDMA system common to the communications within the ad-hoc network; the base station equipment comprising: measurement means for measuring, when a communications path for directly communicating with the mobile station is assumed to be a first communications path and communications paths for communicating with the mobile station via the other radio communications apparatuses within the ad-hoc network are assumed to be second communications paths, power required for transmitting a signal and delay time required for the transmitted signal to reach a communication counterpart for each of those communications paths; and communications path selection means for selecting at least any one of the first communications path and the second communications paths as a communications path to be used for communications with the mobile station, based on the measured values of the power and the delay time and notifying the mobile station of the selected communications path.

As described in Claim 6 , according to the present invention, there is provided a radio communications apparatus which constructs an ad-hoc network with other radio communications apparatuses existing therearound to communicate with the other radio communications apparatuses using any communications system of a TDD-CDMA system, a TDD-TDMA system and a multiple access system based on TDD-OFDM and wirelessly communicates with base station equipment of a mobile communications network using the same communications system and frequency band; the radio communications apparatus having a first communications path for directly communicating with the base station equipment and a second communications path for communicating with the base station equipment via another radio communications apparatus within the ad-hoc network, as communications paths to the base station equipment, and communicating with the base station equipment using a communications path specified by the base station equipment among the first communications path and the second communications paths.

Here, TDD-TDMA is a TDMA (Time Division Multiple Access) system that uses TDD mode as its duplex mode. TDMA is a multiple access system in which the same frequency band is shared by multiple transmitters for a short time in turn. As an example of adoption of the TDD-TDMA, there is PHS (personal handyphone system), for example. TDD-OFDM is OFDM (Orthogonal Frequency Division Multiplexing) in which the TDD mode is used as a duplex mode, and OFDM is a transmission system in which multiple carrier waves are arranged so that spectrums are orthogonal with each other. In this transmission system, one or multiple carrier waves are assigned to each transmitter. As the multiple access system based on OFDM, there are included OFDMA (Orthogonal Frequency Division Multiple Access), OFCDM (Orthogonal Frequency and Code Division Multiplexing) and the like.

Furthermore, as described in Claim 7, according to the present invention, there is provided a radio communications system comprising: base station equipment of a mobile communications network; and a radio communications apparatus which uses any communications system of a TDD-CDMA system, a TDD-TDMA system and a multiple access systembased on TDD-OFDM for communications with the base station equipment and uses the same communications system and the same frequency band as of the mobile communications network for communications with other radio communications apparatuses within an ad-hoc network. A communications path for directly connecting the radio communications apparatus and the base station equipment is assumed to be a first communications path and communications paths for connecting the radio communications apparatus and the base station equipment via the other radio communications apparatuses within the ad-hoc network are assumed to be second communications paths. The base station equipment comprises: measurement means for measuring, for each of the first communications path and the second communications paths, power required for transmitting a signal and delay time required for the transmitted signal to reach a communication counterpart; and communications path selection means for selecting at least any one of the first communications path and the second communications paths as a communications path to be used for communications with the radio communications apparatus, based on the measured values of the power and the delay time and notifying the radio communications apparatus of the selected communications path; and the radio communications apparatus communicates with the base station equipment using the communications path notified by the base station equipment.

The base station equipment described above may include a base station and radio network controller equipment which controls the base station. The other radio communications apparatuses within the ad-hoc network may include a first ad-hoc terminal (UE2) capable of wirelessly communicating with the base station and a second ad-hoc terminal (UE3) capable of communicating with the radio network controller equipment via a wired communications network (such as the Internet). The second communications paths may include a communications path for connecting the radio communications apparatus (UE1) and the base station via the first ad-hoc terminal (UE2) and a communications path for connecting the radio communications apparatus (UE1) and the radio network controller equipment via the second ad-hoc terminal (UE3).

According to the present invention, there are provided, as communications paths for connecting base station equipment of a mobile communications network and a radio communications apparatus, a first communications path for directly connecting both and second communications paths for connecting both via other radio communications apparatuses within the ad-hoc network; the base station equipment selects at least any one of these communications paths and notifies it to the radio communications apparatus; and the radio communications apparatus communicates with the base station equipment using the communications path notified by the base station equipment. Accordingly, it is possible to utilize network resources of the ad-hoc network for communications in the mobile communications network, and thereby, efficiency of utilization of the network resources can be enhanced. Furthermore, for each of the first communications path and the second communications paths, power required for transmitting a signal and delay time required for the transmitted signal to reach a counterpart are measured, and a communications path to be used for communications between the base station equipment and the radio communications apparatus is selected based on the measured values. Consequently, it is possible to promote network efficiency and optimization, and thereby, it is possible to improve the communication capacity and the throughput of the entire network.

Brief Description of the Drawings

Figure 1 is a schematic configuration diagram showing en embodiment of a radio communications system according to the present invention;

Figure 2 is a block diagram showing configuration of main sections of the first radio communications apparatus in Figure 1;
Figure 3 is a schematic diagram for illustrating communications paths connecting radio communications apparatuses and base station equipment in a mobile communications network;
Figure 4 is a block diagram showing configuration of main sections of the base station of the mobile communications network;
Figure 5 is a flowchart for illustrating a process for switching a communications path;
Figure 6 is a schematic configuration diagram showing an example of the mobile communications network;
Figure 7 is a schematic diagram for illustrating a TDD mode and an FDD mode;
Figure 8 shows an example of frame configuration of TDD-CDMA;
Figure 9 is a schematic diagram for illustrating handover processing; and
Figure 10 is a schematic configuration diagram showing an example of an ad-hoc network.

Description of Symbols

10 first radio communications apparatus (radio communications apparatus according to the present invention)
30 base station
40 radio network controller equipment
UE2 first ad-hoc terminal (other radio communications apparatus)
UE3 second ad-hoc terminal (other radio communications apparatus)

Best Mode for Carrying Out the Invention

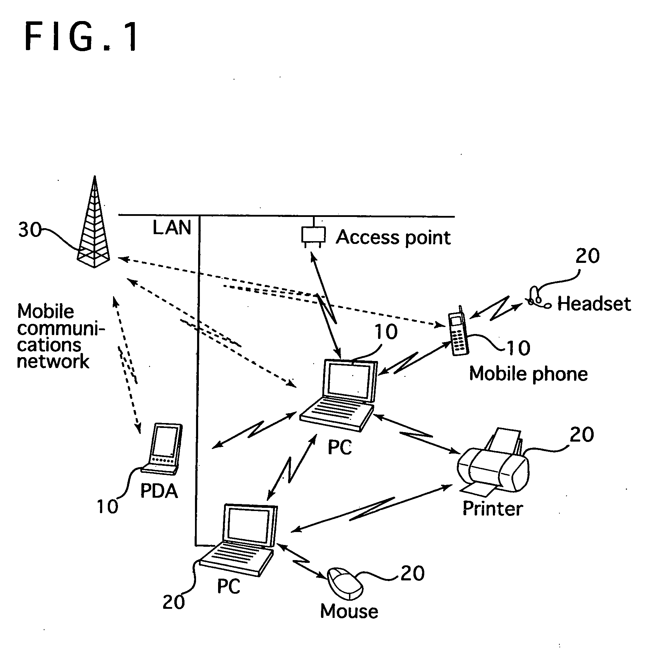

Figure 1 shows an embodiment of a radio communications system according to the present invention. In the figure, reference numeral 10 denotes a first radio communications apparatus, reference numeral 20 denotes a second radio communications apparatus and reference numeral 30 denotes a base station of a mobile communications network. The first radio communications apparatus 10 is a radio communications apparatus with a function of connecting to a mobile communications network (a radio communications apparatus according to the present invention) and is configured, for example, by a mobile phone, a PDA, a personal computer or the like. This first radio communications apparatus 10 is adapted to use a TDD-CDMA system for communications with the base station 30 of the mobile communications network.

The second radio communications apparatus 20 is a radio communications apparatus without the function of connecting to a mobile communications network and is configured, for example, by an information terminal (for example, a personal computer or a workstation) which is wiredly or wirelessly connected to a fixed communications network such as a LAN (local area network) and peripheral equipment of the information terminal (for example, a headset, a printer and a mouse).

These first and second radio communications apparatuses 10 and 20 have an ad-hoc communications function of constructing an ad-hoc network with other radio communications apparatuses 10 and 20 existing around them to enable the radio communications apparatuses within the ad-hoc network to communicate with one another, and they adopt the TDD-CDMA system common to the mobile communications network as the communications system for the ad-hoc network and use the same frequency band as the mobile communications network. Furthermore, they perform communication within the ad-hoc network in synchronization with the communication in the mobile communications network.

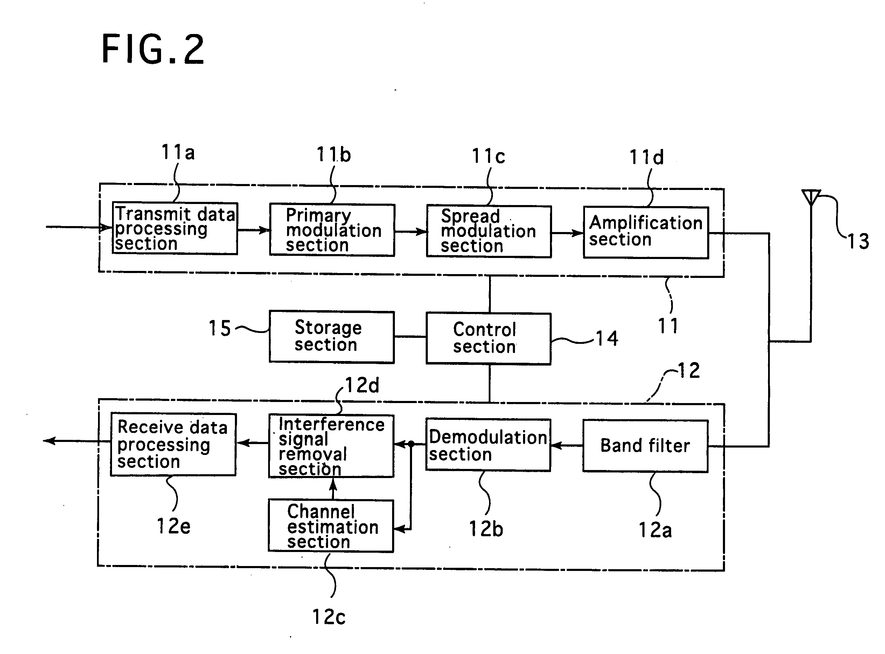

Figure 2 is a block diagram showing configuration of main sections of the first radio communications apparatus. As shown in Figure 2, the first radio communications apparatus 10 has a transmitter 11, a receiver 12, an antenna 13, a control section 14 and a storage section 15.

The transmitter 11 comprises a transmit data processing section 11a for generating a transmit signal, a primary modulation section 11b for performing primary modulation of a carrier wave with the transmit signal, a spread modulation section 11c for performing spread modulation (secondary modulation) of the modulated signal obtained by the primary modulation with a spreading code, and an amplification section 11d for amplifying the spread-modulated signal. That is, a transmit signal generated at the transmit data processing section 11a is primary-modulated at the primary modulation section 11b in a predetermined modulation scheme. Then, it is spread-modulated by a spreading code at the spread modulation section 11c, and after that, it is amplified at the amplification section 11d and emitted from the antenna 13 as a radio wave.

The receiver 12 comprises a band filter 12a for removing unnecessary noise components included in a receive signal received from the antenna 13, a demodulation section 12b for demodulating the receive signal which has passed the band filter 12a into a baseband signal, a channel estimation section 12c for determining an estimated channel value from a midamble included in the baseband signal, an interference signal removal section 12d for removing interferences signal by joint detection with the use of the estimated channel value and the spreading code of each radio communications apparatus, and a receive data processing section 12e for performing various processings based on the demodulated signal from which the interference signals have been removed. A specific midamble is assigned to each of the radio communications apparatuses 10 and 20 in advance, so that the estimated channel value of each radio communications apparatus can be derived from a midamble included in a receive signal. The interference signal removal section 12d generates a system matrix by performing convolution multiplication of the spreading code assigned to each radio communications apparatus in advance by the estimated channel value and obtains a modulated signal by multiplying the baseband signal by the inverse of the system matrix.

The control section 14 controls the transmitter 11 and the receiver 12 based on various information stored in the storage section 15. Switching control between transmitting and receiving, transmit power control, switching control and synchronization control between an ad-hoc network and a mobile communications network and the like are performed by this control section 14. For example, when communication is performed with the base station 30 in the mobile communications network or another radio communications apparatus within the ad-hoc network, switching between transmitting and receiving is performed based on time slot assignment set in advance, and communication is performed in a TDD mode.

When communication is started with another radio communications apparatus within the ad-hoc network, processing for measuring the power of interference signals for each time slot set for the uplink and the downlink of the mobile communications network and selecting time slots to be used for communications within the ad-hoc network based on the measured value. Furthermore, when communication is performed with other radio communications apparatus within the ad-hoc network, timing for communications with that other radio communications apparatus within the ad-hoc network is set to correspond to the communication timing in the mobile communications network, based on synchronization information received from the base station 30. Furthermore, when communication is performed with another radio communications apparatus within the ad-hoc network, an interference level is detected from a receive signal inputted into the receiver 12, and transmit power is adjusted according to the interference level.

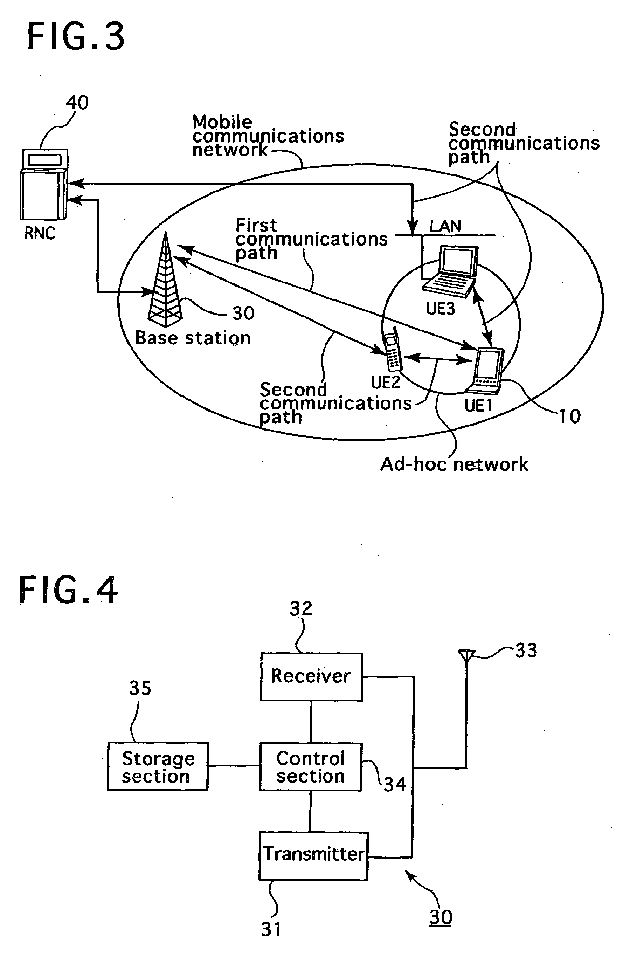

When communication is performed with the use of the mobile communications network, switching control of a communications path is performed in accordance with an instruction from the base station 30. As the communications path, there are included a first communications path for directly communicating with the base station 30 and second communications paths for communicating with base station equipment (the base station 30 or radio network controller equipment (RNC) 40) via other radio communications apparatuses within the ad-hoc network. The other radio communications apparatuses have a function of relaying signals exchanged between the first radio communications apparatus 10 (UE1) and the base station equipment. These radio communications apparatuses include, for example, a radio communications apparatus (UE2: a first ad-hoc terminal) having a function of performing radio communications with the base station 30 and a radio communications apparatus (UE3: a second ad-hoc terminal) capable of connecting to the base station equipment (the radio network controller equipment 40 or the base station 30) via a communications network such as a LAN though not having the function of performing radio communication with the base station 30, as shown in Figure 3. Signals to be relayed by these other radio communications apparatuses (UE2 and UE3) include a signal transmitted from the first radio communications apparatus 10 (UE1) with the use of the uplink of the mobile communications network and a signal transmitted from the base station 30 with the use of the downlink.

In this embodiment, there is realized an ad-hoc communications function of constructing an ad-hoc network with other radio communications apparatuses 10 and 20 existing around by means of the transmitter 11, the receiver 12, the antenna 13, the control section 14, the storage section 15 and the like to enable the radio communications apparatuses within the ad-hoc network to communicate with one another.

The second radio communications apparatus 20 also has a transmitter, a receiver, an antenna, a control section and a storage section similar to those of the first radio communications apparatus 10 described above. By means of these communications means, the second radio communications apparatus 20 can communicate with other radio communications apparatuses within the ad-hoc network with the use of a wireless link without using the base station 30.

Figure 4 is a block diagram showing configuration of main sections of a base station of a mobile communications network. As shown in Figure 4, the base station 30 has a transmitter 31, a receiver 32, an antenna 33, a control section 34, a storage section 35 and the like. Among these, the transmitter 31, the receiver 32 and the antenna 33 have almost the same functions of respective corresponding components of the first radio communications apparatus 10 described above. The control section 34 constitutes measurement means and communications path selection means according to the present invention and is adapted to perform processing for measuring each of power p required for transmitting a signal and delay time d required for the transmitted signal to reach a communication counterpart for each of the first communications path and the second communications paths described above, selecting at least any one of the first communications path and the second communications paths as a communications path to be used for communications with the first radio communications apparatus 10, based on the measured values, and notifying the first radio communications apparatus 10 of the selected communications path.

In selecting the communications path, the control section 34 determines, for each of the first communications path and the second communications paths, a function value M of an evaluation function f(p, d) with the measured values of the power p and the delay time d as arguments, and selects at least any one of the first communications path and the second communications paths as a communications path to be used for communications with the first radio communications apparatus 10, based on the result of comparison of the function values M. Furthermore, in this selection, such a communications path that at least one of the power p and the delay time d exceeds the tolerance value thereof set in advance (power tolerance value P or delay time tolerance value D) is excluded from selection targets in advance.

In this embodiment, a sequence of processings from measurement of the power p and the delay time d till selection and notification of a communications path (a communications path switching process) is performed by the base station 30, as described above. However, the present invention is not limited thereto. For example, the sequence of the processings may be performed by the radio network controller equipment (RNC) 40 or may be performed by the base station 30 and the radio network controller equipment 40 in cooperation with each other.

Next, the communications path switching process to be performed by a radio communications system with the configuration described above, based on the flowchart of Figure 5 is described.

First, at step S1 , the base station 30 performs processing of searching for an ad-hoc network to which the first radio communications apparatus 10 (UE1) to be the communication counterpart belongs, from among ad-hoc networks existing in the cell, obtaining information about the ad-hoc network from the master or the like of the ad-hoc network, and storing it in the storage section 35. The information about the ad-hoc network includes, for example, attribute information about the ad-hoc network and information about each of radio communications apparatuses constituting the ad-hoc network (for example, the kind of the apparatus, transmit power capacity, with or without a function to connecting to a mobile communications network, with or without a function to connecting to the Internet, communication condition, and the like). At this step S1, the first radio communications apparatus 10 (UE1) also performs the processing for obtaining the information about each of radio communications apparatuses constituting the ad-hoc network from the master or the like and storing it in the storage section 15, similarly to the base station 30.

Then, at step S2, the base station 30 performs processing for measuring or estimating characteristics of the delay time d and the power p for each of communications paths (the first communications path and the second communications paths) leading to the first radio communications apparatus 10 (UE1) and storing the characteristic values in the storage section 35. Especially when the radio communications apparatus (UE3) having a function to connect to the Internet exists in the ad-hoc network, the characteristic of the delay time d is measured or estimated for a communications path passing the radio communications apparatus (UE3). The delay time d includes not only time required for transmitting a signal but also time for waiting in a server queue. As the power p, power required for securely transmitting a packet to a receiving side is adopted.

Then, at step S3, the base station 30 performs processing for selecting any one of the first communications path and the second communications paths as a communications path to be used for communications (the uplink and the downlink) with the first radio communications apparatus 10 (UE1), based on the characteristic values of the delay time d and the power p. In this case, the base station 30 determines, for each of the first communications path and the second communications paths, a function value M of an evaluation function f(p, d) with the characteristic values of the power p and the delay time d as arguments, and selects at least any one of the first communications path and the second communications paths as a communications path to be used for communications with the first radio communications apparatus 10 (UE1) based on the result of comparison of the function values M. As the evaluation function f (p, d), Formula 1 can be used, for example .

$$(Formula\ 1)$$

$$M\ =\ f(p,\ d)\ =\ p^a{\times}d^b$$

In Formula 1, a and b are real numbers and, for example, a=b=1 can be preferably used as the values of the parameters. According to this formula, as the function value M is smaller, the communications path can be evaluated as superior in communication characteristics. However,tolerance values (P and D) are set for the power p and the delay time d in many cases, and such a communications path that at least one of the power p and the delay time d thereof exceeds the tolerance value is excluded from choices in advance. For example, when a voice signal is transmitted, it is generally required to design so that the delay time d is less than 60 ms. In such a case, such a communications path that the measured value of the delay time d is equal to or above the tolerance D=60 (ms) is excluded from choices irrespective of the characteristics of the power p. Furthermore, an upper limit is provided for transmit power of each radio communications apparatus. When the upper limit is assumed to be a tolerance value P, such a communications path that the measured value of the power p is equal to or above this tolerance value P is also excluded from choices irrespective of the characteristics of the delay time d.

That is, the base station 30 selects a communications path which satisfies the condition of Formula 2 as a communications path to be used for communications with the first radio communications apparatus 10 (UE1).

$$(Formula\ 2)$$

$$min(M)\ and\ (p{<}P)\ and\ (d{<}D)$$

According to Formula 2, it is possible to easily select the most efficient communications path among communications paths which satisfy the requirement of QoS (quality of service). In this embodiment, any one of the first communications path and the second communications paths is selected as a communications path to be used for communications with the first radio communications apparatus 10 (UE1). However, for example, in the case where reliability of a radio signal is required first, it is also possible to receive the same radio signals respectively via multiple communications paths to preferentially use a desirable signal among them or to synthesize received signals to remove noises. Furthermore, in the case where the condition about the delay time d are not so severe, it is also possible to select a communications path which passes through a nearest radio communications apparatus capable of connecting to the Internet (for example, UE3 in Figure 3) and use the Internet as the transmission path from the radio communications apparatus to the radio network controller equipment (RNC) 40. In this case, power consumption for transmitting a signal can be significantly reduced.

As described above, after selecting a communications path at step S3, the base station 30 performs processing for notifying the first radio communications apparatus 10 (UE1) of the selected communications path at the subsequent step S4. That is, the base station 30 transmits a control signal to the first radio communications apparatus 10 (UE1) to specify a communications path to be used by the first radio communications apparatus 10 (UE1) for the uplink and notify the first radio communications apparatus 10 (UE1) of a communications path to be used for the downlink.

Furthermore, the base station 30 also notifies radio communications apparatuses (for example, UE2 and UE3) which relay communications with the first radio communications apparatus 10 (UE1) and the master of information about the communications path to be used for communications with the first radio communications apparatus 10 (UE1), constraint conditions about QoS and the like.

When receiving notification of the communications path to be used for communications for the base station equipment (the base station 30 or the radio network controller equipment 40), the first radio communications apparatus 10 (UE1) starts communication with the base station equipment using the communications path. In this case, if the communications path specified by the base station 30 is the first communications path, then the first radio communications apparatus 10 (UE1) communicates with the base station 30 not via other radio communications apparatus within the ad-hoc network but directly, using time slots and a spreading code assigned for communications with the base station 30. If the communications path specified by the base station 30 is a second communications path, then the first radio communications apparatus 10 (UE1) performs radio communication with another radio communications apparatus (a radio communications apparatus constituting a second communications path; for example, UE2, UE3 or the like) within the ad-hoc network using time slots and a spreading code assigned by the master of the ad-hoc network. Then, receiving a signal to be relayed from one of the first radio communications apparatus 10 (UE1) and the base station equipment, that other radio communications apparatus performs processing for transferring the signal to the other.

After that, the base station 30 and the first radio communications apparatus 10 (UE1) periodically and repeatedly performs the above process, and performs processing for updating information stored in the storage sections 35 and 15.

Next, description will be made on a process for connecting to an ad-hoc network to be performed by the first radio communications apparatus 10. Here, description will be made on the assumption that the first radio communications apparatus 10 is a node X. This process is performed before the communications path switching process described above, and is started, for example, when the communications mode is switched to an ad-hoc mode.

First, the node X searches an ad-hoc network for a master, and performs processing for setting the node type of the node X to master or slave based on the search result. That is, processing for detecting a pilot signal originated from the master is performed by the node X. As a result, if a pilot signal can be detected, the node type is set to slave, and if a pilot signal cannot be detected, the node type is set to master.

Here, in the case where the node type is set to slave, then the node X performs processing for transmitting node information (for example, the ID, the address and the like of the node X) to the master using a common channel set in advance. When receiving the node information about the node X, the master updates network information (node information about each slave, network resources, QoS parameters and the like) in its storage section based on this node information, and then performs processing for delivering the network information to each slave (including the node X) within the ad-hoc network. Thereby, the node X is incorporated in the ad-hoc network as a slave.

On the other hand, in the case where the node type is set to master, then the node X repeatedly broadcasts a pilot signal in a predetermined cycle and periodically performs the processing for updating the network information and the processing for detecting communication condition of slaves while monitoring control signals outputted from the slaves. Thereby, an ad-hoc network with the node X as a master is constructed, and maintenance and management of the ad-hoc network is performed by the node X.

Next, description will be made on processing to be performed when communication is performed between nodes within the ad-hoc network constructed as described above. For example, when the node X starts communication with another radio communications apparatus (hereinafter referred to as a node Y) which is set as a slave in the case where the node X is set as a slave, the node X first performs processing for specifying the ID of the node Y to be a communication counterpart and transmitting a request for assignment of a communications channel to the master using a common channel. In response to this, the master refers to network information in its storage section to check the communication condition of the node Y, and performs processing for assigning a communications channel between the nodes X and Y.

In this case, the master performs processing for assigning the most efficient communications channel as a communications channel between the nodes X and Y or the most efficient communications channel as the entire network by measuring, for each time slot set for the uplink and the downlink of the mobile communications network, the power of interference signals (signals from mobile stations of the mobile communications network and signals from the base station 30) and selecting time slots to be used for communications within the ad-hoc network based on the measured values.

After that, the master performs processing for returning set-up information in which assignment of a communications channel is specified to the node X which has originated a communication request. In this case, the master also performs processing for updating the network information based on the set-up information and storing it in the storage section and processing for delivering the updated network information to each slave within the ad-hoc network.

When receiving the set-up information necessary for communications with the node Y, the node X stores the set-up information in the storage section 15, and then performs transmitting and receiving of data signals directly with the node Y in accordance with the set-up information. In this case, the node X performs power control in order not to interfere neighboring radio communications apparatuses which do not join the ad-hoc network. That is, it measures the interference level of all time slots based on received signals inputted into the receiver 12 and performs transmit power control so that the maximum value (the tolerance value) of transmit power, which is the sum of the measured values and an offset value set in advance, is not exceeded. The node X also performs processing for receiving a signal from the base station 30, obtaining information for synchronization included in a predetermined time slot of the received signal, and setting timing for communications with the node Y so that it corresponds to the communication timing in the mobile communications network, based on the synchronization information, and processing for determining estimated channel values of a desired signal transmitted from the node Y and other interference signals based on midambles included in the receive signals, removing the interference signals by joint detection with the use of the estimated channel values and the spreading code assigned to each signal, and the like.

After that, the master periodically inquires of the nodes X and Y about the communication condition, and when confirming that communication between the nodes X and Y has been completed, the master frees the communications channel which has been assigned to communications between the nodes X and Y. Then, the master performs processing for updating the network information and storing it in its storage section and processing for delivering the updated network information to each slave within the ad-hoc network.

As described above, according to this embodiment, there are provided, as communications paths for connecting the base station equipment (the base station 30 or the radio network controller equipment 40) of the mobile communications network and the radio communications apparatus 10 (UE1), a first communications path for directly connecting both with each other and second communications paths for connecting both with each other via other radio communications apparatuses (for example, UE2, UE3 and the like) within the ad-hoc network. At least any one of these communications paths is selected and notified to the first radio communications apparatus 10 (UE1) by the base station equipment, and the first radio communications apparatus 10 (UE1) communicates with the base station equipment using the communications path notified by the base station equipment. Therefore, it is possible to utilize network resources of the ad-hoc network for communications in the mobile communications network, and thereby, efficiency of utilization of the network resources can be improved. Furthermore, each of power p required for transmitting a signal and delay time d required for the transmitted signal to reach a communication counterpart is measured for each of the first communications path and the second communications paths. After that, a function value M of an evaluation function f (p, d) with the measured values as arguments is determined, and a communications path to be used for communications between the base station equipment and the first radio communications apparatus 10 (UE1) is selected based on the result of comparison of the function values. Thereby, it is possible to promote network efficiency and optimization, and thereby it is possible to improve the communication capacity and the throughput of the entire network.

In this embodiment, a common TDD-CDMA system is adopted and the same frequency band is used for communications within the ad-hoc network and communications between the base station 30 and the radio communications apparatus 10 in the mobile communications network. However, the present invention is not limited thereto, and a communications system to be used for the ad-hoc network and the mobile communications network may be any common TDD-based communications system, and a TDD-TDMA system or a multiple access system based on TDD-OFDM may be used, for example.

Industrial Applicability

According to the present invention, it is possible to promote network efficiency and optimization by effectively utilizing network resources of both of an ad-hoc network and a mobile communications network, and thereby it is possible to improve the communication capacity and the throughput of the entire network.

**Claims**

1. A radio communications apparatus which constructs an ad-hoc network with other radio communications apparatuses existing therearound to wirelessly communicate with the other radio communications apparatuses using a TDD-CDMA system, and wirelessly communicates with base station equipment of a mobile communications network using the TDD-CDMA system; the radio communications apparatus having a first communications path for directly communicating with the base station equipment and a second communications path for communicating with the base station equipment via another radio communications apparatus within the ad-hoc network, as communications paths to the base station equipment, and communicating with the base station equipment using a communications path specified by the base station equipment among the first communications path and the second communications paths.

2. A radio communications system comprising:

   base station equipment of a mobile communications network; and
   a radio communications apparatus which uses a TDD-CDMA system for communications with the base station equipment and uses the TDD-CDMA system common to the communications with the base station equipment and the same frequency band for communications with other radio communications apparatuses within an ad-hoc network; wherein
   when a communications path for directly connecting the radio communications apparatus and the base station equipment is assumed to be a first communications path and communications paths for connecting the radio communications apparatus and the base station equipment via the other radio communications apparatuses within the ad-hoc network are assumed to be second communications paths,

the base station equipment comprises:

measurement means for measuring, for each of the first communications path and the second communications paths, power required for transmitting a signal and delay time required for the transmitted signal to reach a communication counterpart; and
communications path selection means for selecting at least any one of the first communications path and the second communications paths as a communications path to be used for communications with the radio communications apparatus, based on the measured values of the power and the delay time and notifying the radio communications apparatus of the selected communications path; and
the radio communications apparatus communicates with the base station equipment using the communications path notified by the base station equipment.

3. The radio communications system according to claim 2, wherein:

the communications path selection means determines, for each of the first communications path and the second communications paths, a function value of an evaluation function with the measured values of the power and the delay time as arguments, and selects at least any one among the first communications path and the second communications paths as a communications path to be used for communications with the radio communications apparatus, based on the result of comparison of the function values.

4. The radio communications system according to claim 2, wherein:

the communications path selection means excludes, when tolerance values are set for the power and the delay time in advance, such a communications path that at least one of the power and the delay time thereof exceeds the tolerance value.

5. Base station equipment of a mobile communications network which communicates with a mobile station, in the case where the mobile station is a radio communications apparatus capable of constructing an ad-hoc network with other radio communications apparatuses existing therearound to wirelessly communicate with the other radio communications apparatuses using a TDD-CDMA system, using the TDD-CDMA system common to the communications within the ad-hoc network; the base station equipment comprising:

measurement means for measuring, when a communications path for directly communicating with the mobile station is assumed to be a first communications path and communications paths for communicating with the mobile station via the other radio communications apparatuses within the ad-hoc network are assumed to be second communications paths, power required for transmitting a signal and delay time required for the transmitted signal to reach a communication counterpart for each of those communications paths; and
communications path selection means for selecting at least any one of the first communications path and the second communications paths as a communications path to be used for communications with the mobile station, based on the measured values of the power and the delay time and notifying the mobile station of the selected communications path.

6. A radio communications apparatus which constructs an ad-hoc network with other radio communications apparatuses existing therearound to communicate with the other radio communications apparatuses using any communications system of a TDD-CDMA system, a TDD-TDMA system and a multiple access system based on TDD-OFDM and wirelessly communicates with base station equipment of a mobile communications network using the same communications system and frequency band; the radio communications apparatus having a first communications path for directly communicating with the base station equipment and a second communications path for communicating with the base station equipment via another radio communications apparatus within the ad-hoc network, as communications paths to the base station equipment, and communicating with the base station equipment using a communications path specified by the base station equipment among the first communications path and the second communications paths.

7. A radio communications system comprising:

base station equipment of a mobile communications network; and
a radio communications apparatus which uses any communications system of a TDD-CDMA system, a TDD-TDMA system and a multiple access system based on TDD-OFDM for communications with the base station equipment and uses the communications system common to the communications with the base station equipment and the same frequency band for communications with other radio communications apparatuses within an ad-hoc network; wherein

when a communications path for directly connecting the radio communications apparatus and the base station equipment is assumed to be a first communications path and communications paths for connecting the radio communications apparatus and the base station equipment via the other radio communications apparatuses within the ad-hoc network are assumed to be second communications paths,

the base station equipment comprises:

measurement means for measuring, for each of the first communications path and the second communications paths, power required for transmitting a signal and delay time required for the transmitted signal to reach a communication counterpart; and

communications path selection means for selecting at least any one of the first communications path and the second communications paths as a communications path to be used for communications with the radio communications apparatus, based on the measured values of the power and the delay time and notifying the radio communications apparatus of the selected communications path; and

the radio communications apparatus communicates with the base station equipment using the communications path notified by the base station equipment.

8. The radio communications system according to claim 7, wherein:

the base station equipment includes a base station and radio network controller equipment for controlling the base station;

the other radio communications apparatuses in the ad-hoc network include a first ad-hoc terminal capable of wirelessly communicating with the base station and a second ad-hoc terminal capable of communicating with the radio network controller equipment via a wired communications network; and

the second communications paths include a communications path for connecting the radio communications apparatus and the base station via the first ad-hoc terminal and a communications path for connecting the radio communications apparatus and the radio network controller equipment via the second ad-hoc terminal.

# FIG.1

30

LAN

Access point

20

Mobile
communi-
cations
network

Headset

10

10

Mobile phone

PC

20

Printer

10 PDA

PC

20

20

Mouse

# FIG.2

EP 1 667 481 A1

# FIG.3

# FIG.4

# FIG.5

START

↓

Acquires information about ad-hoc network —S1

↓

Measures delay time d and power p —S2

↓

Selects communications path —S3

↓

Notifies communications path —S4

↓

END

# FIG.6

# FIG.7

Base station       (FDD)      Mobile phone

Base station       (TDD)      Mobile phone

# FIG.8

10ms

Symmetrical

Asymmetrical
4:1 DL/UL

Asymmetrical
14:1 DL/UL

666μs

▮ Time slot for uplink transmission

▯ Time slot for downlink transmission

# FIG.9

Mobile phone

Base station                    Base station

# FIG.10

LAN        Access point

Headset

Mobile phone

PC

PDA

Printer

Mouse

PC

## INTERNATIONAL SEARCH REPORT

| International application No. |
| --- |
| PCT/JP2004/012722 |

**A. CLASSIFICATION OF SUBJECT MATTER**
Int.Cl⁷ H04Q7/36, H04L12/28

According to International Patent Classification (IPC) or to both national classification and IPC

**B. FIELDS SEARCHED**

Minimum documentation searched (classification system followed by classification symbols)
Int.Cl⁷ H04Q7/36, H04L12/28

Documentation searched other than minimum documentation to the extent that such documents are included in the fields searched
| | | | |
| --- | --- | --- | --- |
| Jitsuyo Shinan Koho | 1922–1996 | Toroku Jitsuyo Shinan Koho | 1994–2004 |
| Kokai Jitsuyo Shinan Koho | 1971–2004 | Jitsuyo Shinan Toroku Koho | 1996–2004 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2003-230167 A   (NTT Docomo Inc.),<br>15 August, 2003 (15.08.03),<br>Full text; all drawings<br>(Family: none) | 1-8 |
| A | JP 2000-175244 A  (Matsushita Electric<br>Industrial Co., Ltd.),<br>23 June, 2000 (23.06.00),<br>Par. Nos. [0090] to [0109]<br>& CN 1260650 A          & CA 2292331 A1<br>& EP 1009183 A1         & KR 2000062188 A | 1-8 |
| A | JP 2003-18234 A  (Hitachi Kokusai Electric Inc.),<br>17 January, 2003 (17.01.03),<br>Full text; all drawings<br>(Family: none) | 1-8 |

☒ Further documents are listed in the continuation of Box C.          ☐ See patent family annex.

| | |
| --- | --- |
| *      Special categories of cited documents:<br>"A"   document defining the general state of the art which is not considered<br>       to be of particular relevance<br>"E"   earlier application or patent but published on or after the international<br>       filing date<br>"L"   document which may throw doubts on priority claim(s) or which is<br>       cited to establish the publication date of another citation or other<br>       special reason (as specified)<br>"O"   document referring to an oral disclosure, use, exhibition or other means<br>"P"   document published prior to the international filing date but later than<br>       the priority date claimed | "T"   later document published after the international filing date or priority<br>       date and not in conflict with the application but cited to understand<br>       the principle or theory underlying the invention<br>"X"   document of particular relevance; the claimed invention cannot be<br>       considered novel or cannot be considered to involve an inventive<br>       step when the document is taken alone<br>"Y"   document of particular relevance; the claimed invention cannot be<br>       considered to involve an inventive step when the document is<br>       combined with one or more other such documents, such combination<br>       being obvious to a person skilled in the art<br>"&"   document member of the same patent family |

| Date of the actual completion of the international search<br>    07 December, 2004 (07.12.04) | Date of mailing of the international search report<br>    21 December, 2004 (21.12.04) |
| --- | --- |
| Name and mailing address of the ISA/<br>    Japanese Patent Office | Authorized officer |
| Facsimile No. | Telephone No. |

Form PCT/ISA/210 (second sheet) (January 2004)

| | INTERNATIONAL SEARCH REPORT | International application No. |
|---|---|---|
| | | PCT/JP2004/012722 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2001-112043 A  (Mitsubishi Electric Corp.), 20 April, 2001 (20.04.01), Full text; all drawings (Family: none) | 1-8 |
| A | JP 11-55318 A  (NEC Corp.), 26 February, 1999 (26.02.99), Full text; all drawings & US 6240080 B1 | 1-8 |

Form PCT/ISA/210 (continuation of second sheet) (January 2004)